# EUROPEAN PATENT APPLICATION

(11) **EP 4 796 202 A1**
(43) Date of publication of application: **26.08.2026**
(21) Application number: 25159249.9
(22) Date of filing: 21.02.2025
(51) Int. Cl.: B01D 53/04

(54) **METHOD FOR OPERATING AN ADSORPTION ARRANGEMENT, ADSORPTION ARRANGEMENT AND AIR SEPARATION UNIT COMPRISING AN ADSORPTION ARRANGEMENT**

(71) Applicant: Linde GmbH, 82049 Pullach (DE)
(72) Inventor: Zapp, Gerhard, 82049 Pullach (DE)
(74) Representative: Grundner, Sebastian

(57) **Abstract**

A method (100) for operating an adsorption arrangement (10) comprising adsorption vessels (11, 12) with adsorption beds is provided. The adsorption vessels (11, 12) are operated in operating cycles including in an adsorption mode and a regeneration mode, the regeneration mode comprising a heating phase and a cooling phase subsequent to the heating phase. The method (100) comprises defining (110) one or more accumulation targets for one or more components to be adsorbed in the adsorption vessels (11, 12) in the adsorption mode, and one or more regeneration targets for the regeneration mode, determining (120), at one or more instances during the adsorption mode, a remaining adsorption time in which an adsorption vessel (11, 12) presently operated in the adsorption mode may still be operated in the adsorption mode without exceeding the one or more accumulation targets, and a total adsorption time including an elapsed adsorption time and the remaining adsorption time, and determining (130), during the remaining adsorption time, a heating time used for the heating phase, a cooling time used for the cooling phase, and one or more flow rates of one or more regeneration gases used in the regeneration mode such as to meet the one or more regeneration targets. Said determining (120, 130) the remaining adsorption time, the heating time, the cooling time, and the one or more flow rates includes using one or more tuning factors to modify at least the one or more accumulation targets and the one or more regeneration targets. An adsorption arrangement (10) as well as an air separation unit (1000) including an adsorption arrangement is also proposed.

## Description

### Field

The present disclosure relates to a method for operating an adsorption arrangement, particularly to separate carbon dioxide and water from air, to an adsorption arrangement, and to an air separation unit comprising an adsorption arrangement.

### Background

The production of air products in a liquid or gaseous state by cryogenic separation of atmospheric air in air separation units is known and described, for example, in H.-W. Häring (ed.), Industrial Gases Processing, Wiley-VCH, 2006, section 2.2.5, "Cryogenic Rectification". While, hereinbelow, a particular focus is placed on cryogenic air separation, at least some of the instrumentalities proposed may also be used in other applications where gases or gas mixtures are intended to be subjected a cryogenic treatment such as, but not limited to, a cryogenic separation.

A prerequisite for cryogenically treating gas mixtures in general is the removal of water, carbon dioxide and optionally other components, if present, before they are cooled to cryogenic temperatures. In an air separation unit, the feed air is treated accordingly before it enters the so-called "cold section," particularly in a "pre-purification unit" as generally known in the field. The use of molecular sieves is a common method for the removal of the components mentioned, also referred to as "contaminants" hereinbelow. Typically, two or more mole sieve vessels filled with zeolite, an aluminium silicate mineral, and alumina gel are used in for this purpose. Removal of the contaminants by mole sieves is performed on the basis of adsorption, and therefore reference is made to "adsorption arrangements" and "adsorption vessels" herein.

The adsorption vessels operate alternatingly, which means that while the feed gas is passed through the adsorption material in one of the adsorption vessels, and is therefore in operation or in an "adsorption mode," the adsorption material in a different one of the adsorption vessels is regenerated to desorb the contaminants from the adsorption material in a "regeneration mode." The regeneration mode includes, in the language used herein, a "heating phase" in order to induce the actual desorption, and, subsequent thereto, a "cooling phase" in order to prepare the adsorption material for the subsequent adsorption mode. After a maximum adsorption time has been reached, the operation switches over such that the adsorption vessel previously operated in the adsorption mode is operated in the regeneration mode and the adsorption vessel previously operated in the regeneration mode operated in the adsorption mode.

There is still a desire for improvements in operating adsorption apparatus, particularly including mole sieves, and particularly in connection with cryogenic air separation.

### Summary

In view of the above, a method for operating an adsorption arrangement, an adsorption arrangement, and an air separation unit comprising the features of the independent claims are provided herein. Embodiments are the subject of the dependent claims and of the description that follows.

The proposed method is used for operating an adsorption arrangement comprising adsorption vessels with adsorption beds, the adsorption vessels being operated in operating cycles including an adsorption mode and a regeneration mode, the regeneration mode comprising a heating phase and a cooling phase subsequent to the heating phase. The proposed method comprises defining one or more accumulation targets for one or more components to be adsorbed in the adsorption vessels in the adsorption mode, and one or more regeneration targets for the regeneration mode, determining, at one or more instances during the adsorption mode, a remaining adsorption time in which an adsorption vessel presently operated in the adsorption mode may still be operated in the adsorption mode without exceeding the one or more accumulation targets, and a total adsorption time including an elapsed adsorption time and the remaining adsorption time, and determining, during the remaining adsorption time, a heating time used for the heating phase, a cooling time used for the cooling phase, and one or more flow rates of one or more regeneration gases used in the regeneration mode such as to meet the one or more regeneration targets. Furthermore, in the proposed method, said determining the remaining adsorption time, the heating time, the cooling time, and the one or more flow rates includes using one or more tuning factors to modify at least the one or more accumulation targets and the one or more regeneration targets.

An accumulation target, according to the language used herein, particularly is a maximum amount of one or more components which may or should be adsorbed to the adsorption material in an adsorption vessel. Similarly, a regeneration target particularly is a level to which the one or more components previously adsorbed are desorbed and may particularly be a complete desorption.

The accumulation target can be expressed as one or more accumulation target values for one or more components to be adsorbed, particularly for water and carbon dioxide, and may represent the maximum possible loading of an adsorbent in an adsorbent vessel with said one or more components. The accumulation target value(s) can be indicated as absolute amount(s) of the component(s). The accumulation target value(s) particularly may depend on the mass (e.g. in kilograms) and the specific adsorption capacity of the adsorbent (e.g. kilograms water per kilogram adsorbent), or, more specifically, the product of the specific capacity and mass of the adsorbent.

Depending on the measurement method, for example, the accumulation target value(s) can be numerically indicated as molar amount(s), volume(s), mass(es) or the like (in standard cubic metres, cubic metres, litres, kilograms, etc.). The accumulation target value(s) can be derived from experimental data, manufacturer data, such as in datasheets, modelled data, etc., and may vary if one or more further components are present. If such further components need to be taken into account, the amount of adsorbent material may change or additional layers with different molecular materials may be necessary. However, this may play a less important role, since in general a given adsorption capacity can be assumed according to manufacturer data. The accumulation target value(s) can also be total values for two or more components. Embodiments may also use an accumulation target below a maximum possible accumulation or loading, particularly to include a safety margin, such as, for example, 5%, 10% or 20% below the maximum possible accumulation or loading.

The regeneration target can also be expressed as regeneration target value(s) and/or may represent the heating and cooling energy required to free the adsorbent from the adsorbed component(s), particularly starting from the accumulation target value. Alternatively, the regeneration target may be a state where the adsorbent is essentially or completely freed from the adsorbed component(s), which can be the result of a certain desorption energy or temperature, and a certain time associated therewith. The energy needed for desorption depends on the amount of adsorbed components during the previous adsorption step. Since ad adsorber vessel is generally operated in adsorption/desorption equilibrium, there is a simple correlation between the adsorption targets and the desorption target. As above, the regeneration target value(s) can be derived from experimental data, manufacturer data, modelled data, etc., and may vary if one or more further components are present. Again, regeneration target value(s) can also be summing values for two or more components. Like above, a certain margin, such as, for example, 5%, 10% or 20% above the complete desorption can also be used, in order to increase speed and reduce the desorption time, for example.

The proposed method overcomes problems connected with methods according to the prior art which, as discussed below in detail, may include leaving all parameters constant to correspond to the maximum air load case under warm ambient conditions, an adjustment of the regeneration gas only, set as a function of the current air load, but leaving the times constant, an adjustment of all the parameters as a function of the current air load only, an adjustment of all the parameters as a function of the current air load and air temperature according to a pre-calculated lookup table, and an integration of the air load, sometimes integration of the regeneration load to predefined targets. According to the proposed method, parameters may be continuously adjusted and adapted to match the specific requirements of adsorption considering values such as a water content or a temperature of feed air and a temperature of a regeneration gas.

In embodiments of the proposed method, the one or more tuning factors is or are determined from observational data determined by an observer function, and/or the one or more tuning factors is or are determined on the basis of a determination made by a human operator. This allows for automatically acquiring, and manually adapting, such values for an optimum match.

In certain embodiments, the one or more tuning factors is or are determined using an automated process on the basis of values, particularly peak values, of one or more process variables. As explained below, e.g. temperature peaks at the outlet of the adsorption vessels may be indicative of whether a regeneration time has been orderly set or exceeded, as in the latter case large temperature peaks may be observed. This also may relate to a breakthrough of components to be adsorbed.

That is, in certain embodiments, the one or more process variables used for determining the one or more tuning factors include at least one of a temperature peak at the end of the heating phase and a temperature peak at the end of the cooling phase. As mentioned, this allows for verifying whether the values have been properly adjusted or adapted in the method.

Certain embodiments as proposed herein may include that said determining the remaining adsorption time, the heating time, the cooling time, and the one or more flow rates, and a determination of the one or more tuning factors is performed once per operating cycle. This allows for a continuous adjustment of parameters and therefore a precise and reliable operation.

In the method as proposed herein, the components to be adsorbed in the adsorption vessels include at least one of carbon dioxide and water, and a gas mixture from which the components to be adsorbed in the adsorption vessels is air. This allows a use of the method in connection with cryogenic air separation, as further discussed below.

In certain embodiments, the proposed method is implemented by a computer, e.g. in a control unit of an adsorption arrangement or an air separation unit. In this connection, a computer program product is also proposed herein which may comprise instructions, e.g. stored on a non-transitory computer-readable medium, which, when executed by a computer or a corresponding control unit, perform a method as discussed above in certain embodiments or any step thereof. A computer-readable medium having stored thereon the computer program just mentioned may also be part of the disclosure.

An adsorption arrangement comprising adsorption vessels with adsorption beds is also proposed herein. The adsorption arrangement is configured to operate the adsorption vessels in operating cycles including in an adsorption mode and a regeneration mode, the regeneration mode comprising a heating phase and a cooling phase subsequent to the heating phase. The adsorption arrangement is further configured to define one or more accumulation targets for one or more components to be adsorbed in the adsorption vessels in the adsorption mode, and one or more regeneration targets for the regeneration mode. The adsorption arrangement is further configured to determine, at one or more instances during the adsorption mode, a remaining adsorption time in which an adsorption vessel presently operated in the adsorption mode may still be operated in the adsorption mode without exceeding the one or more accumulation targets, and a total adsorption time including an elapsed adsorption time and the remaining adsorption time, and to determine, during the remaining adsorption time, a heating time used for the heating phase, a cooling time used for the cooling phase, and one or more flow rates of one or more regeneration gases used in the regeneration mode such as to meet the one or more regeneration targets. According to the proposed method, determining the remaining adsorption time, the heating time, the cooling time, and the one or more flow rates includes using one or more tuning factors to modify at least the one or more accumulation targets and the one or more regeneration targets.

As to further details and advantages of the arrangement and the air separation unit also proposed herein, reference is made to the explanations above, because the features and advantages of the method for operating an adsorption apparatus and the embodiments thereof provided herein likewise apply to the proposed arrangement and the proposed air separation unit. Particularly, the arrangement or the air separation unit provided herein may be configured to perform a method of any of the embodiments proposed herein.

A computing unit, such as a control unit of an adsorption arrangement of an air separation unit as explained, is designed, in particular by means of programming, to carry out a method as proposed herein or an embodiment thereof. The implementation of a method as proposed herein or an embodiment thereof in the form of a computer program or computer program product with program code for carrying out all the method steps may also be envisaged, since this incurs particularly low costs, especially if an executing control unit is still used for other tasks and is therefore available anyway. Finally, a machine-readable storage medium may form part of the present disclosure, the storage medium being provided with a computer program. Suitable storage media or data carriers for providing the computer program are, in particular, magnetic, optical and electrical storage devices. It may also be envisaged to provide a computer program for download via a computer network.

### Figures

Embodiments as disclosed herein will now be described, by way of example only, with reference to accompanying drawings, in which
Figure 1 shows an air separation unit;
Figure 2 schematically illustrates a method according to an embodiment; and
Figure 3 shows parameter curves with peaks usable in an embodiment.

### Embodiments

In the Figures, elements of identical, essentially identical, functionally comparable, or technically compatible function and/or purpose may be identified with identical reference numerals, and repeated explanations may be omitted for reasons of conciseness. Explanations herein relating to entities such as devices, apparatus, arrangements and systems, according to certain embodiments disclosed herein, likewise may apply to procedures or steps thereof, such as methods and processes according to corresponding embodiments.

The various embodiments described herein are presented only to assist in understanding and teaching the claimed features. These embodiments are provided as a representative sample of embodiments only and may neither be exhaustive or exclusive. It is to be understood that advantages, embodiments, examples, functions, features, structures or other aspects described herein are not to be considered limitations on the scope of the invention, which is defined by the claims, or limitations on equivalents to the claims, and that other embodiments may be utilised, and modifications may be made without departing from the scope of the claimed invention.

Various embodiments as disclosed herein may suitably comprise, consist of, or consist essentially of, appropriate and technically sensible combinations of the disclosed elements, components, features, parts, steps or means other than those specifically described herein. In addition, this disclosure may include other inventions not presently claimed, but which may be claimed in future.

The following explanations and definitions relating to some of the principles of the invention may apply to all or some of the embodiments presented herein, and the explanation of certain aspects in connection with only some or one of the embodiments should not be taken to mean that these aspects cannot also be realised with other or all embodiments, as far as technically possible and reasonable.

The conjunction "and/or" when used in a list or in an enumeration before the last element of the list or enumeration, should be understood to mean that all terms previously mentioned in the enumeration can be combined with each other in any way. In other words, "A, B and/or C" means "A and/or B and/or C" or "at least one of the elements A, B, C in any combination." The terms used in the context of the present disclosure generally have the meanings recognised in the art.

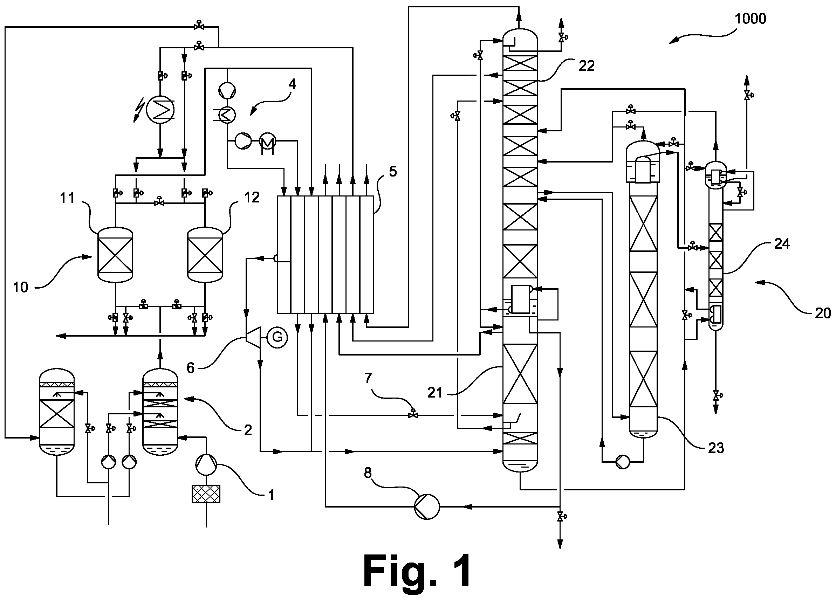

Figure 1 schematically illustrates an air separation unit 1000 of a type disclosed in section 2.2.5 of Häring (see above) on which basis instrumentalities proposed herein will be illustrated. For more detailed explanations of the design and mode of operation of an air separation unit 1000, reference is made to specialist literature.

An air separation unit 1000 for use in connection with embodiments proposed herein can be designed in a wide variety of ways, and the embodiments proposed herein are in no way limited by a specific configuration of an air separation unit 1000. As mentioned, embodiments proposed herein may likewise be applied for cryogenic gas treatment processes other than cryogenic air separation.

The air separation unit 1000 comprises a main air compressor 1, a pre-cooling system 2, an adsorption apparatus 10 forming, or being part of, a pre-purification unit, a booster compressor arrangement 4, a main heat exchanger 5, an expansion turbine 6, a Joule-Thomson valve 7, a pump 8 and a rectification column system 20. In the example shown, the adsorption arrangement 10 comprises a first adsorption vessel 11 and a second adsorption vessel 12. In the example shown, furthermore, the rectification column system 20 comprises a classic double column arrangement comprising a pressure column 21 and a low-pressure column 22 as well as a crude argon column 23 and a pure argon column 34.

In the air separation unit shown in Figure 1, atmospheric air is aspirated and compressed by means of the main air compressor 1 via a filter unit not specifically labelled. The compressed feed air is sent to pre-cooling system 2 which is operated with cooling water. The precooled feed air is then purified in adsorption arrangement 10. In the adsorption arrangement 10, whose adsorption vessels 11, 12 as described before, the pre-cooled feed air is purified from water and carbon dioxide.

Downstream of the adsorption arrangement 10, the feed air is divided into different air streams. One of the air streams is completely cooled at the pressure level of the feed air provided by the main air compressor 1 in the main heat exchanger 5. A further air stream is further compressed in further compression unit 4 and also cooled in the main heat exchanger 5, but only to an intermediate temperature level. Thereafter, this so-called turbine stream is expanded by means of the expansion turbine 6 to the pressure level of the completely cooled partial stream referred to before, combined therewith, and sent to the pressure column 21 for separation.

A yet further air stream, also referred to as a throttle or Joule-Thomson stream, is compressed in booster compression arrangement 4 to a yet higher pressure level, is completely cooled in the main heat exchanger 5, and is thereafter expanded, via expansion unit 7, to form a biphasic stream which is sent to the pressure column 21. Immediately below a feeding position of the throttle or Joule-Thomson stream, liquid thereof is withdrawn and passed to low pressure column 22 while gas is allowed to raise in pressure column 21. This avoids an external separator.

An oxygen-enriched liquid bottom fraction and a nitrogen-enriched gaseous top fraction are formed in the pressure column 21. The oxygen-enriched liquid bottom fraction is withdrawn from the pressure column 21, partly used as a heating medium in a bottom evaporator of the pure argon column 24, and fed in defined proportions into an overhead condenser of the pure argon column 24, an overhead condenser of the raw argon column 23, and into the low-pressure column 22. Fluid evaporating in the evaporation chambers of the overhead condensers of the crude argon column 23 and the pure argon column 24 is also transferred to the low-pressure column 22.

To obtain argon, fluid is withdrawn from the low-pressure column 22 slightly below the so-called argon maximum and passed to the crude argon column 23. From the crude argon column 23, an argon-depleted liquid is passed back to the low-pressure column 22 at a suitable position. Gas is withdrawn from the top of the crude argon column 23, transferred to the pure argon column 24, and further processed therein to obtain pure argon and a nitrogen-rich fluid, which can be released into the atmosphere in particular.

The gaseous nitrogen-rich overhead product is withdrawn from the top of the pressure column 21, liquefied in a main condenser, which establishes a heat-exchanging connection between the pressure column 21 and the low-pressure column 22, and fed in portions as a reflux to the pressure column 21 and expanded into the low-pressure column 22. An oxygen-rich liquid bottom fraction and a nitrogen-rich gaseous top fraction are formed in the low-pressure column 22. The former is partially pressurized in a liquid state in pump 8, heated in the main heat exchanger 5 and made available as an internally compressed product. A liquid nitrogen-rich stream is withdrawn from a liquid retention device at the top of the low-pressure column 22 and exported from the air separation unit as shown in Figure 1 as a liquid nitrogen product.

A gaseous nitrogen-rich stream withdrawn from the top of the low-pressure column 22 is passed through the main heat exchanger 5 and provided as a nitrogen product at the pressure of the low-pressure column 22. Furthermore, a stream from an upper region of the low-pressure column 22 is, after heating in the main heat exchanger 5, used as so-called impure nitrogen in the pre-cooling device 2 or, after heating by means of an electric heater, in the adsorption arrangement 10.

Degrees of freedom for an adsorption arrangement 10 such as the one shown in Figure 1 are the regeneration gas flow, the heating time, the cooling time and the power to heat up the regeneration gas or the regeneration gas temperature. These parameters have to be set properly to achieve a good regeneration subject to a maximum adsorption time to avoid the breakthrough of the contaminants to the cold section of the air separation unit 1000 which, in the example shown, includes the main heat exchanger 5 and the column system 20 connected to a cold side thereof.

Proper tuning of these parameters can only be verified if the regeneration temperature shape and peak values, the increase of the carbon dioxide content determined by an analysis unit downstream of the adsorption arrangement 10, and an outlet temperature of a heat accumulator, if present and not shown in Figure 1 as a part of air separation unit 1000, are properly observed and monitored.

The optimal operation of adsorption arrangements 10 such as shown in Figure 1 as a part of air separation unit 1000 is a complex, more dimensional problem. The amount of water fed into the adsorption beds, for example, depends on the air flow and on its moisture that is a function of air temperature and pressure. The maximum adsorption time for water depends on these parameters. In case of low air temperatures, some more carbon dioxide can be adsorbed and finally the maximum carbon dioxide adsorbed in the active bed is limiting the total adsorption time. Changing carbon dioxide concentrations in the ambient air, on the other hand, needs to be considered in the total adsorption time calculation as well.

Changing the heating and cooling time changes the overall adsorption time. The higher the amount of regeneration gas flow, the shorter the heating time can set, but this may result in a too high power for heating up the regeneration gas being required. Insufficient heating and cooling do not remove the components sufficiently, thus increasing the danger of a breakthrough. The effect of modified mole sieve settings can only be seen after the next cycle after several hours and, in the meantime, the air feed my have changed a further time. On the other hand, once a breakthrough of the components has occurred, this may result in a dangerous situation with respect to operational safety of an air separation unit 1000.

In the light of these considerations, it is not surprising that most adsorption arrangements 10 of air separation units are presently operated on the safe side, with shorter adsorption times and higher regeneration gas power as theoretically possible for each case. This can be recognized in high regeneration gas temperature outlet peaks also referred to as "cooling peaks."

Typically, parameter adjustments or settings for adsorption arrangements 10 in conventional set-ups may include (i) leaving all parameters constant to correspond to the maximum air load case under warm ambient conditions, (ii) an adjustment of the regeneration gas only, set as a function of the current air load, but leaving the times constant, (iii) an adjustment of all the parameters as a function of the current air load only, (iv) an adjustment of all the parameters as a function of the current air load and air temperature according to a pre-calculated lookup table, and (v) an integration of the air load, sometimes integration of the regeneration load to predefined targets. Such solutions may not be appropriate with closed loops, "closed loops" meaning that the achieved regeneration peaks are compared to target values and an automatic adjustment of the operation parameters is actively performed by the control strategy.

Embodiments as proposed herein include instrumentalities to control the measured peak values by online adjustment of the operation parameters of an adsorption arrangement 10, particularly of an air separation unit 1000 and including a mole sieve adsorption material in vessels 11, 12.

Already in the past, as described in DE 10 2015 011 201 A1, a "shortcut method" had been developed to describe the operation of a molecular sieve by a phenomenological model. The steady-state equations described in this connection are, according to embodiments proposed herein, extended to a dynamic representation, allowing for cyclically calculating the remaining capacity for the water and carbon dioxide adsorption and the still missing regeneration power.

The precondition for performing the shortcut method just referred to is a precise and essentially complete design calculation for each individual molecular sieve. Based on the results of the design calculation, the operating parameters of heating time, cooling time and the amount of regeneration gas in the vicinity of the design point can be calculated directly in a very good approximation using algebraic equations. The design values for heating time, cooling time and regeneration gas quantity, as well as some constants to be taken from the design, serve as reference values. In addition, the operating variables for steady-state operation then depend only on the air flow rate F, air inlet temperature T and air inlet pressure p of the mole sieve and can be calculated directly by inserting several algebraic equations in a single calculation cycle.

In a first step, water and carbon M_{H2O} and M_{CO2} are integrated up during a current adsorption time t_{Acurr} as indicated in Equations 1 to 4 below, and are reset once per each sequence cycle of the adsorption vessels 11, 12. Accordingly, the regeneration heating and cooling power H and C get integrated up during the current heating and cooling times t_{Hcurr} and t_{Ccurr} their respective sequence steps and are reset at a changeover of the adsorption vessels 11, 12. ${M}_{H 2 O} = {{\int }_{0}}^{tAcurr} \left(F*{X}_{H 2 O}\right)$ ${M}_{CO 2} = {{\int }_{0}}^{tAcurr} \left(F*{X}_{CO 2}\right)$ $H = {{\int }_{0}}^{tHcurr} \left({FR}_{H}*cp*{TR}_{H}\right)$ $C = {{\int }_{0}}^{tCcurr} \left({FR}_{C}*cp*{TR}_{C}\right)$

In equations (1) to (4), and the equations below, F indicates an air flow to the adsorption vessels 11, 12 (e.g. expressed as standard cubic meters per hour, Nm³/h), X_{H2O} indicates water contents in the air to be treated as a function of temperature and pressure (dimensionless), X_{CO2} indicates carbon dioxide contents in the air, mainly dependent on environment condition (dimensionless), cp indicates the specific heat capacity of the regeneration gas and may in detail be a function of the temperature or an average value (e.g. expressed in Kilojoules per standard cubic meter and Kelvin, kJ/Nm³/K), TR_{H} indicates a temperature of the regeneration gas (e.g. expressed in degrees Celsius or Kelvin, °C or K) during heating, TR_{C} indicates a temperature of the regeneration gas (expressed in degrees Celsius or Kelvin, °C or K) during cooling, FR_{H} indicates a regeneration gas flow during heating (e.g. expressed in standard cubic meters per hour, Nm³/h) and FR_{C} indicates a regeneration gas flow during cooling (e.g. expressed in standard cubic meters per hour, Nm³/h).

On this basis, the remaining time for adsorption may be calculated such that neither the water nor the carbon dioxide maximum accumulation gets violated. In this connection, maximum target values for above integrations may be defined and may be used as reference values (REF). ${M}_{H 2 O REF} = \left(F*{X}_{H 2 O}\right) * {t}_{A}$ ${M}_{CO 2 REF} = \left(F*{X}_{CO 2}\right) * {t}_{A}$ ${H}_{REF} = \left({FR}_{H}*{cp}_{REF}*{TR}_{H REF}\right) * {t}_{H}$ ${C}_{REF} = \left({FR}_{C}*{cp}_{REF}*{TR}_{C REF}\right) * {t}_{C}$ ${FR}_{C} = k * {FR}_{H}$${t}_{A} = {t}_{H} + {t}_{C} + {t}_{CHG}$

FRc corresponds to a ratio of FR_{C} and FR_{H} and t_{A} to a total adsorption time. t_{CHG} indicates a switch over time from one adsorption vessel 11, 12 to the other (e.g. expressed in minutes), t_{H} indicates a heating time of the heating cycle (e.g. expressed in minutes), t_{C} indicates a cooling time of the cooling cycle (e.g. expressed in minutes), and k indicates a factor to set FR differently during heating and cooling. in many cases, k corresponds to a value of 1.0.

The model considers that the maximum accumulation targets are not constant, but the capacity to adsorb carbon dioxide depends on the moisture in the air feed, thus enabling a higher carbon dioxide accumulation if the air feed has a lower temperature.

Possible degrees of freedom, i.e. values that are adjustable by the operator from the basic control layer interface, are the current regeneration gas FR, the heating time t_{H}, and the cooling time t_{C}.

It Is then the task of the cyclically solved control problem in the real plant application to calculate these three degrees of freedom in a way that the accumulation and regeneration targets are met, considering changing air flow, air temperature, air pressure, ambient conditions, and regeneration gas temperature at the current time. This may be accomplished as follows:
From above, the maximum remaining time t_{A rem} for the adsorption is calculated such that neither the water nor the carbon dioxide maximum accumulation gets violated by determining the minimal value according to Equation 11. ${t}_{Arem} = min \left(\left({M}_{H 2 OREF}-{M}_{H 2 O}\right)/F/{X}_{H 2 O},\left({M}_{CO 2 REF}-{M}_{CO 2}\right)/F/{X}_{CO 2}\right)$

The total predicted accumulation with water and carbon dioxide then needs to be recalculated using the current accumulation so far plus the predicted accumulation during the remaining adsorption time (t_{Acurr} + t_{Arem}) until changeover. This is necessary to reflect that the maximum accumulation targets are not constant, but the capacity to adsorb carbon dioxide depends on the moisture in the air feed, thus enabling a higher carbon dioxide accumulation if the air feed has a lower temperature. ${M}_{H 2 OTG} = {M}_{H 2 O} + {{\int }_{tAcurr}}^{\left(tAcurr+tArem\right)} \left(F*{X}_{H 2 O}\right)$ ${M}_{CO 2 TG} = {M}_{CO 2} + {{\int }_{tAcurr}}^{\left(tAcurr+tArem\right)} \left(F*{X}_{CO 2}\right)$

The regeneration targets have to be recalculated as well, according to the changed accumulation targets. ${H}_{TG} = {H}_{REF} * \left({M}_{H 2 O TG}/{M}_{H 2 O REF}+{M}_{CO 2 TG}/{M}_{CO 2 REF}\right)$ ${C}_{TG} = {C}_{REF} * \left({M}_{H 2 O TG}/{M}_{H 2 O REF}+{M}_{CO 2 TG}/{M}_{CO 2 REF}\right)$

Within the remaining adsorption time t_{Arem} the heating and cooling times (t_{H}, t_{C}) as well as the regeneration gas flow FR finally have to be calculated such that the respective regeneration targets are met. ${FR}_{H} = \left(\left(k*{H}_{TG}-H\right)+\left({C}_{TG}-C\right)\right) / \left({t}_{A curr}+{t}_{A rem}-{t}_{CHG}\right) / \left(cp*{TR}_{H}\right)$ ${FR}_{c} = k * {FR}_{H}$

The last term considers different regeneration gas temperatures TR_{H} compared to the reference value. Knowing FR_{curr} enables for calculating the heating and cooling times:
and $\begin{matrix}{t}_{H} = {t}_{H rem} + {t}_{H curr} = \left(k*{H}_{TG}-H\right) / \left({FR}_{H}*cp*{T}_{H}\right) + {t}_{H curr} \\ {t}_{C} = {t}_{C rem} + {t}_{C curr} = \left({C}_{TG}-C\right) / \left({FR}_{C}*cp*{T}_{C}\right) + {t}_{C curr} \\ {t}_{A rem} = {t}_{H rem} + {t}_{C rem} + {t}_{CHG}\end{matrix}$

Essential for the invention is the introduction of several tuning factors k1 to k5 for each accumulation target to scale up/down the maximum accumulation of the contaminants resp. the regeneration power. The advantage of this approach is that these factors are decoupling the control problem to easy-to-understand parameters while the overall solution remains always solved. ${t}_{Arem} = fct \left(k1*{M}_{H 2 OTG}-{M}_{H 2 O}, k1*{M}_{CO 2 TG}-{M}_{CO 2}, F, {X}_{H 2 O}, {X}_{CO 2}\right)$ ${t}_{A} = fct \left(k1*{M}_{H 2 OTG}-{M}_{H 2 O}, k1*{M}_{CO 2 TG}-{M}_{CO 2} F, {X}_{H 2 O}, {X}_{CO 2}\right) + {t}_{A curr}$ ${t}_{H} = fct \left(k2*{H}_{TG}-H, {FR}_{H}, {TR}_{H}\right) + {t}_{H curr}$ ${t}_{C} = fct \left({k 3 * C}_{TG}-C, {FR}_{C}, {TR}_{C}\right) + {t}_{C curr}$ ${t}_{A} = {t}_{H} + {t}_{C} + {t}_{CHG}$ ${FR}_{C} = {k 4 * FR}_{H}$

In a layout with heat accumulator the set of equations becomes even more complicated as a part of the regeneration gas outside the heating steps is used to heat up the heat accumulator again, wherein FR_{W} indicates a regeneration gas flow to the heat accumulator (e.g. expressed in standard cubic meters per hour, Nm³/h). ${FR}_{W} = {FR}_{H} - {FR}_{C} and {FR}_{C} = fct \left({FR}_{H}, {t}_{A}, {FR}_{Wref}\right)$

The still remaining factor k5 is used to adjust the electrical heater power for the adsorption vessels 11, 12 to heat up the adsorption beds during heating and the heat accumulator during cooling and changeover.

The set of equations can be cyclically solved, typically on an advanced applications station linked to the basic control layer (such as a Distributed Control System, DCS, or a Supervisory Control and Data Acquisition, SCADA) of the plant giving every few seconds updated values for t_{H}, t_{C}, FR_{C}, FR_{H}, FR_{W}.

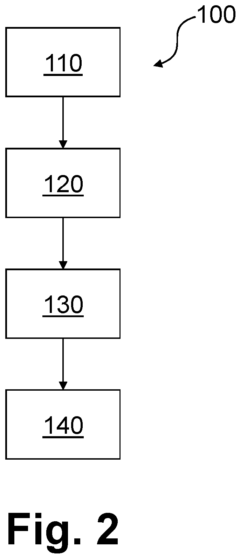

This will now briefly be illustrated with reference to Figure 2 which shows a simplified procedural diagram of a method 100 as proposed herein.

The method 100 is proposed for operating an adsorption arrangement 10 comprising adsorption vessels 11, 12 with adsorption beds as shown before, the adsorption vessels 11, 12 being operated in operating cycles including in an adsorption mode and a regeneration mode, the regeneration mode comprising a heating phase and a cooling phase subsequent to the heating phase.

In the method 100 as proposed herein, one or more accumulation targets for one or more components to be adsorbed in the adsorption vessels 11, 12 in the adsorption mode, and one or more regeneration targets for the regeneration mode are defined in a step 110. Herein, a "regeneration target" may particularly include a degree or completeness of regeneration, as well as parameters such as a regeneration time.

At one or more instances during the adsorption mode, and in a step 120, a remaining adsorption time in which an adsorption vessel 11, 12 presently operated in the adsorption mode may still be operated in the adsorption mode without exceeding the one or more accumulation targets, and a total adsorption time including an elapsed adsorption time and the remaining adsorption time are determined. Furthermore, during the remaining adsorption time, in a step 130, a heating time used for the heating phase, a cooling time used for the cooling phase, and one or more flow rates of one or more regeneration gases used in the regeneration mode are determined such as to meet the one or more regeneration targets.

In said determining steps 120, 130 the remaining adsorption time, the heating time, the cooling time, and the one or more flow rates includes using one or more tuning factors to modify at least the one or more accumulation targets and the one or more regeneration targets. In a step 140, the determined values are applied to the adsorption arrangement and the method 100 continues to a new cycle.

In embodiments proposed herein, therefore, several tuning factors for each accumulation target to scale up and down the maximum accumulation of the contaminants and the regeneration power are used, as discussed above.

This molecular sieve shortcut model as described before can, in certain embodiments disclosed herein, be used in different modes of application.

For example, a verification of current operation may be made. For this purpose, for analyzing the actual operation of molecular sieves in industrial air separation productions sites, for example, the tuning factors k1 to k5 can be back calculated to show the current operation compared to the design or reference case. The factors k₁ to k₅ may also be used to adjust the operation manually. Often a step-by-step approach towards design conditions will already help to achieve better performance. An automatic control will now be described in more detail.

The performance of the molecular sieve operation cannot be seen continuously on a glance but only from some peaks in a trend view over several hours or even days. Typically, the carbon dioxide concentration in the air downstream of the adsorption arrangement is measured by an analyzer. If the maximum possible adsorption time is exceeded, an increase in this measurement towards end of the cycle is observed. Furthermore, an outlet temperature of the beds in the adsorption units in regeneration shows a temperature peak during cooling, named the "cooling peak."

Typical values for a good adjustment are about 100 °C. If too much regeneration power is used, this temperature peak will be significantly higher. The outlet temperature of a heat accumulator increases during loading up and reaches its maximum just before entering the heating step. This temperature is, therefore, an indication for proper heat supply.

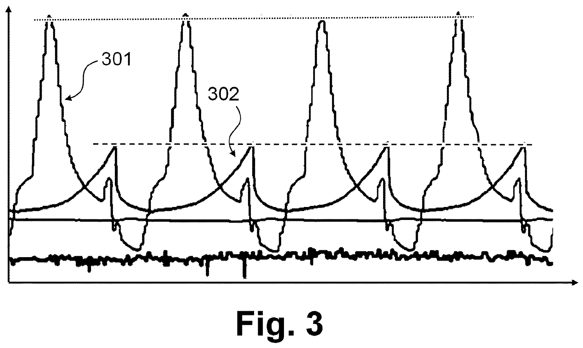

Figure 3 shows a diagram in which temperature curves for the outlet temperature of the beds in the adsorption units including cooling peaks 301 and the outlet temperatures of a heat accumulator including peaks 302 are shown. Temperatures are indicated on the vertical axis and a time is indicated on the horizontal axis. The average values are indicated with a dotted and a dashed line, respectively.

Above peak values may, in embodiments proposed herein, form the process variables for the control algorithm. They are not continuously available but have to be calculated during each sequence step. As mole sieve beds often do not behave identically, the average values of at least two peak values should be used.

To recapitulate and extend what was said above, embodiments disclosed herein include a description of the adsorption by a dynamic short cut model including the tuning factors to decouple the individual settings. An evaluation of the peak values during the respective steps of the molecular sieve sequence may be performed. Process variables from these peak values may be monitored and finally controlled by an algorithm. As mole sieve beds may have slightly different behaviour, it may be advantageous to use the average of at least two peak values as the process variable. From this, these calculated process variables are only updated once per cycle.

A control algorithm to increase or decrease the tuning factors such that the process variables meet their given setpoints may be used. Most intuitive, factor k₂ is used to adjust the cooling peaks, and factor k₅ may be used to adjust the heat accumulator temperature peaks. Adaption of the overall cycle time by k₁ according to the carbon dioxide peaks is possible as well but drives everything to the edge without safety margin. Just as the process variables are only updated once per cycle, the control algorithm adjusts the tuning factors k₂ and k₅ (but in general also the other tuning factors) just once per cycle. in the simplest realization, the factors are adjusted e.g. simply by a proportional factor K * (SP - PV). As this is executed in each cycle, this results in an integrating behaviour of the controller.

The tuning factors may be load dependent and thus are calculated from an interpolation between settings for turndown load and settings for high load. Therefore, the control algorithm needs to know the average air load for which the tuning factors had been calculated from as the basis to in-/decrement from. $tf new = tf_old \left(avg. air load\right) + K * \left(SP-PV\right)$

In this case it is a simple offset to the basis interpolation nodes, resulting in a parallel shift of the factors.

If the tuning factors are load dependent, it might be advantageous to calculate the offset of every interpolation node in a way that the interpolation value that is closer to the argument gets weighted more compared to the other one. The interpolation line then gets rotated, but the more distant node gets only changed by a smaller amount. As the weighting factor, in this case, the normalized load factor between low load and high load may be used in embodiments.

The optimization of the operation of an adsorption arrangement as proposed herein has several benefits. The most obvious is the saved regeneration gas power by avoiding overheating during the regeneration heating steps. Prolonging the adsorption time reduces the number of changeovers with the need for additional compressor power to pressurize the bed before switching to operation. The gaseous nitrogen not required for the regeneration can be sold as additional product, especially in a nitrogen driven production schedule. Alternatively, the saved gaseous nitrogen can be fed to an evaporation cooler to further cool down the feed air to the mole sieves. Next to this, avoiding carbon dioxide breakthroughs reduces the operation safety risk in the main condenser. The long-term degradation of the adsorption arrangement due to overheating may be reduced, and plant throughput under each ambient condition when the total air flow and the capacity is the limiting factor may be increased.

## Claims

1. A method (100) for operating an adsorption arrangement (10) comprising adsorption vessels (11, 12) with adsorption beds, the adsorption vessels (11, 12) being operated in operating cycles including an adsorption mode and a regeneration mode, the regeneration mode comprising a heating phase and a cooling phase subsequent to the heating phase, and the method (100) comprising:
defining (110) one or more accumulation targets for one or more components to be adsorbed in the adsorption vessels (11, 12) in the adsorption mode, and one or more regeneration targets for the regeneration mode;
determining (120), at one or more instances during the adsorption mode, a remaining adsorption time in which an adsorption vessel (11, 12) presently operated in the adsorption mode may still be operated in the adsorption mode without exceeding the one or more accumulation targets, and a total adsorption time including an elapsed adsorption time and the remaining adsorption time; and
determining (130), during the remaining adsorption time, a heating time used for the heating phase, a cooling time used for the cooling phase, and one or more flow rates of one or more regeneration gases used in the regeneration mode such as to meet the one or more regeneration targets,
wherein said determining (120, 130) the remaining adsorption time, the heating time, the cooling time, and the one or more flow rates includes using one or more tuning factors to modify at least the one or more accumulation targets and the one or more regeneration targets.

2. The method (100) according to claim 1,
wherein the one or more tuning factors is or are determined from observational data determined by an observer function, and/or
wherein the one or more tuning factors is or are determined on the basis of a determination made by a Human operator.

3. The method (100) according to claim 1,
wherein the one or more tuning factors is or are determined using an automated process on the basis of peak values of one or more process variables.

4. The method (100) according to claim 3,
wherein the one or more process variables used for determining the one or more tuning factors include at least one of a temperature peak at the end of the heating phase and a temperature peak at the end of the cooling phase.

5. The method (100) according to any of the preceding claims,
wherein said determining (120, 130) the remaining adsorption time, the heating time, the cooling time, and the one or more flow rates, and a determination of the one or more tuning factors is performed once per operating cycle.

6. The method (100) according to any of the preceding claims,
wherein the components to be adsorbed in the adsorption vessels (11, 12) include at least one of carbon dioxide and water, and
wherein a gas mixture from which the components to be adsorbed in the adsorption vessels (11, 12) is air.

7. The method (100) according to any of the preceding claims,
wherein the method (100) is implemented by a computer.

8. An adsorption arrangement (10) comprising adsorption vessels (11, 12) with adsorption beds, the adsorption arrangement (10) being configured to operate the adsorption vessels (11, 12) in operating cycles including in an adsorption mode and a regeneration mode, the regeneration mode comprising a heating phase and a cooling phase subsequent to the heating phase, and the adsorption arrangement (10) being further configured to:
define (110) one or more accumulation targets for one or more components to be adsorbed in the adsorption vessels (11, 12) in the adsorption mode, and one or more regeneration targets for the regeneration mode;
determine (120), at one or more instances during the adsorption mode, a remaining adsorption time in which an adsorption vessel (11, 12) presently operated in the adsorption mode may still be operated in the adsorption mode without exceeding the one or more accumulation targets, and a total adsorption time including an elapsed adsorption time and the remaining adsorption time; and
determine (130), during the remaining adsorption time, a heating time used for the heating phase, a cooling time used for the cooling phase, and one or more flow rates of one or more regeneration gases used in the regeneration mode such as to meet the one or more regeneration targets,
wherein said determining (120, 130) the remaining adsorption time, the heating time, the cooling time, and the one or more flow rates includes using one or more tuning factors to modify at least the one or more accumulation targets and the one or more regeneration targets.

9. The adsorption arrangement (10) according to claim 8,
wherein the adsorption arrangement (10) is configured to perform a method according to any one of claims 1 to 7.

10. An air separation unit (1000),
wherein the air separation unit (1000) comprises an adsorption arrangement (10) according to claim 8 or 9.

11. A computing unit, particularly a control unit of an adsorption arrangement according to claim 9 or an air separation unit according to claim 10 configured, particular by programming, to carry out a method according to any one of claims 1 to 7.

12. A computer program or computer program product comprising program code configured when executed on a computing unit, particularly according to claim 11, to carry a method according to any one of claims 1 to 7.

13. A machine-readable storage medium provided with a computer program or computer program product according to claim 12.
